# EUROPEAN PATENT APPLICATION

(11) **EP 2 230 009 A1**
(43) Date of publication of application: **22.09.2010**
(21) Application number: 09155329.7
(22) Date of filing: 17.03.2009
(51) Int. Cl.: B01J 19/00, B01J 19/24, C10G 9/00, C10G 9/20, F28F 13/12

(54) **Process for quenching the effluent gas of a furnace.**

(71) Applicant: Total Petrochemicals Research Feluy, 7181 Seneffe (Feluy) (BE)
(72) Inventor: The designation of the inventor has not yet been filed
(74) Representative: Neel, Henry

(57) **Abstract**

The present invention relates to a process for quenching the effluent gas of a furnace comprising :
a) providing a furnace comprising a radiant zone enclosure means having a plurality of tubes disposed therein, an inlet means for introducing the process fluid into the tubes, means for exposing the external surface of the tubes to radiant heat for heating said process fluid and thereby produce an effluent gas,
b) providing a quench zone having a plurality of quench tubes in which the effluent gas is passed and such as the inlet of one quench tube is connected to the outlet of one or more tubes of the radiant zone,
c) recovering the effluent gas after it has been cooled in the quench tubes, wherein,

at least a part of the quench tubes and advantageously all the quench tubes are tubes having a spiral element protuberate inside of it, on all the length or a part of the length, to promote turbulent flow.

The present invention also relates to a quench exchanger to carry out the above process.

## Description

### [Field of the invention]

Steam cracking is a well-known process and is carried out by passing a hydrocarbon feed mixed with about 20-90 mol % steam through metal pyrolysis tubes located in a fuel fired furnace to raise the feed to cracking temperatures, e.g., about 1400°F to 1700°F and to supply the endothermic heat of reaction, for the production of products including unsaturated light hydrocarbons, particularly C2 to C4 olefins and diolefins, especially ethylene, useful as chemicals and chemical intermediates. In thermal cracking of hydrocarbons, especially steam cracking to light olefins, a transfer line heat exchanger (TLE) unit is provided in which cracked gas flows from the cracking furnace into heat exchange tubes. The main purpose of this TLE is to cool very quickly the cracked gas (the effluent of the cracking furnace) in order to quench the cracking reactions, thus this TLE is also known as a quench exchanger.

### [Background of the invention]

Cracking furnaces are equipped with transfer line exchangers (TLEs) in order to cool the reactor effluent. The cooling has to be effected as quickly as possible in order to stop the cracking reactions. Since there is no heat added to the zone between the firebox of the furnace and the TLE the reactions in this zone are unselective and therefore undesired. The transfer line exchangers can be divided into two main categories: shell and tube type and close coupled type.

The shell & tube type TLE combines the effluent of multiple cracking passes and divides it over a large number of relatively small cooling tubes. Due to the large surface area this exchanger can quench the reactions quite fast.

In the shell & tube type TLE the cracked gas from many reaction tubes of the furnace is manifolded, passed into the expansion cone of said shell & tube type TLE, then through a tube sheet and into the cooling tubes of a multitube shell and tube TLE in order to cool the gas and generate steam. The cracked gas is distributed to the cooling tubes by the inlet chamber. Since the cross sectional area of the TLE tubesheet is large compared to the area of the inlet nozzle and outlet collection manifold, the cracked gas must expand when leaving the manifold and contract again when entering the cooling tubes. In a typical shell & tube type TLE exchanger, the velocity drops from about 450 ft/sec at the inlet nozzle to about 60 ft/sec before entering the cooling tubes. Once in the cooling tubes, the velocity is increased again to approximately 300 ft/sec; this expansion and contraction of the cracked gas coupled with its low velocity in the exchanger inlet chamber causes turbulence and uncontrolled residence time. This uncontrolled residence time causes a deterioration in the selectivity to desirable olefins, and coking. The heavier components and poly-nuclear aromatics in the cracked gas condense and polymerize to form coke in the inlet chamber. During process upsets or onstream decoking, this coke spalls and plugs the exchanger tubes causing a drastic increase in the exchanger pressure drop. Also, when hot gas strikes the dead flow zone caused by the tube sheet between the cooling tubes, heavier components and poly-nuclear aromatics suspended in the cracked gas are knocked out of the gas stream and condense and polymerize to form coke on the tube sheet between the cooling tubes. This coke deposit grows and gradually covers or blocks the entrance to the cooling tubes thus impeding heat transfer and causing the exchanger to lose its thermal efficiency.

The close coupled TLE is a single tube directly connected to one or more cracking passes. Due to the absence of a tube sheet this TLE is insensitive to erosion or fouling and the average residence time of the gas in the inlet chamber is greatly reduced. Compared to a shell and tube TLE the close coupled TLE is more selective at the inlet. However, it is not as thermally efficient as the shell and tube TLE, since the larger diameter tube leads to a lower heat transfer coefficient. As a result the cracking reaction continues for a longer time and reduces the overall selectivity. Moreover, very long tubes are required with a higher overall pressure loss, which further reduces the selectivity. These effects negate the initial gain in selectivity. Close coupled TLE have already been described in the prior art.

US 4457364 relates to close coupled TLE in thermal cracking of hydrocarbons especially steam cracking to light olefins. In said prior art a transfer line heat exchanger unit is provided in which cracked gas flows from a furnace into heat exchange tubes, which comprises a connector or distributor having an inlet for said gas and two diverging branches forming with said connector a wye for passage of gas, each branch having along its length a substantially uniform cross-sectional area and being in fluid flow communication with a respective cooling tube. Thus, the device can be close-coupled to the radiant coils of the furnace because the path of gas flow is short since each branch of the wye leads directly into a cooling tube whereas the expansion chamber of a conventional TLE, which has to widen to accommodate a bundle of heat exchange tubes thus lengthening the path, is eliminated. Unfired residence time and pressure drop are reduced, thereby improving selectivity to ethylene. A wye or a tri-piece may be used, with a suitable, relatively small angle of divergence between adjacent branches. Each branch has a substantially uniform cross-sectional area along its length preferably not varying by more than about 10 percent, more preferably not varying by more than about 5 percent. The large expansion of gas in a conventional TLE inlet chamber with attendant large drop in velocity, is avoided. In said prior art the cracked gas flows directly from the branches of the wye to the respective cooling tubes. The cooling tubes (also referred as quenching tubes) are jacketed by an outer shell wherein water is introduced in said shell and converted to steam thereby cooling the cracked gas.

US 3671198 describes a method and apparatus for treating a hydrocarbonaceous process fluid by indirectly heating such fluid to high temperatures in extremely short periods of time and then rapidly cooling. The process fluid is passed into the straight single pass reaction tubes of the heater, such reaction tubes being contained in a refractory enclosure. The tubes are each connected to an individual quench tube wherein the process fluid (the cracked gas) may be rapidly cooled either by a coolant flowing through a plurality of jackets each surrounding each individual quench tube or, in another embodiment, the process fluid may be cooled by having the quench tubes immersed in a liquid bath.

In the above prior arts the quenching tubes have a plain inner surface.

WO2008033193 relates to a quench exchanger and quench exchanger tube with increased heat transfer area on the process side of the tube. The exchanger provides increased heat transfer efficiency relative to a fixed tube length and at the same time eliminates stagnant and low velocity areas as well as recirculation eddies. The tubes incorporate a fin profile on the process side of the tube with alternating concave and convex surfaces. Additionally, the fins are preferably aligned with the tube center line as opposed to being twisted or spiraled.

It has now been discovered that the heat transfer can be increased by promoting turbulent flow, breaking the boundary film that forms on bare tubes allowing better mixing of the fluids inside.

The turbulent flow in a tube can be promoted by using a tube with a spiral element protuberate inside of it. Such tubes are for example known as MERT tubes (Mixing Element Radiant Tube) as produced by the company Kubota® or the SCOPE® tubes by Schmidt & Clemens. However, other types of internal surface enhancements are possible as well.

Advantage of the above tubes in the close coupled quenching is a better selectivity of the furnace and reduced length of the close coupled exchanger.

### [Brief summary of the invention]

The present invention relates to a process for quenching the effluent gas of a furnace comprising :
a) providing a furnace comprising a radiant zone enclosure means having a plurality of tubes disposed therein, an inlet means for introducing the process fluid into the tubes, means for exposing the external surface of the tubes to radiant heat for heating said process fluid and thereby produce an effluent gas,
b) providing a quench zone having a plurality of quench tubes in which the effluent gas is passed and such as the inlet of one quench tube is connected to the outlet of one or more tubes of the radiant zone,
c) recovering the effluent gas after it has been cooled in the quench tubes, wherein,
at least a part of the quench tubes and advantageously all the quench tubes are tubes having a spiral element protuberate inside of it, on all the length or a part of the length, to promote turbulent flow.

Advantageously the part of the tube having the spiral element protuberate should be long enough to stop the cracking reactions, but could potentially extend the entire length of the tube in order to minimize the heat transfer surface area.

The present invention also relates to a quench exchanger close coupled to a furnace for quenching the effluent gas of the said furnace comprising :
a plurality of quench tubes in which the effluent gas is passed and such as the inlet of one quench tube is connected to the outlet of one or more tubes of the radiant zone of the furnace,
means for recovering the effluent gas after it has been cooled in the quench tubes,
wherein,
at least a part of the quench tubes and advantageously all the quench tubes are tubes having a spiral element protuberate inside of it, on all the length or a part of the length, to promote turbulent flow.

### [Detailed description of the invention]

**As regards the furnace,** the present invention advantageously relates to a fired heater for heating process fluids, e.g., process heaters. More specifically, it relates to a fired heater of the type which comprises at least one radiant section in which process fluid flowing through tubes therein is indirectly heated, preferably, by radiant energy provided by burners. The methods and apparatus used in accordance with the present invention are particularly well suited and advantageous for pyrolysis of normally liquid or normally gaseous aromatic and/or aliphatic hydrocarbon feedstocks such as ethane, propane, naphtha or gas oil to produce ethylene and other by products such as acetylene, propylene, butadiene, etc. Accordingly, the present invention will be described and explained in the context of hydrocarbon pyrolysis, particularly steam cracking to produce ethylene.

**As regards the quench tubes,** advantageously the inlet of one quench tube is connected to the outlet of one, two, three or four tubes of the radiant zone, and preferably to two tubes of the radiant zone. The quench tubes have advantageously an outside diameter of about 2 to about 5 inches and preferably about 3 inches (not including an optional jacket).

If the inlet of one quench tube were to be connected to the outlet of one tube of the radiant zone the inner diameter of the quench tube and the inner diameter of the quench tube are about the same. However, two outlet of tubes of the radiant zone are typically connected to one close coupled quench tube, so the quench tube becomes larger to maintain constant velocity.

They can be individually jacketed by an outer shell wherein water is introduced in said shell and converted to steam thereby cooling the effluent gas. Two or more quench tubes can be jacketed by an outer shell wherein water is introduced in said shell and converted to steam thereby cooling the effluent gas. The quench tubes are typically made of alloy steel. By way of example one can cite :
C-½Mo → DIN17175: 15Mo3. ASTM: SA209 T1a
or 1.25Cr-0.5 Mo → SA213 T11

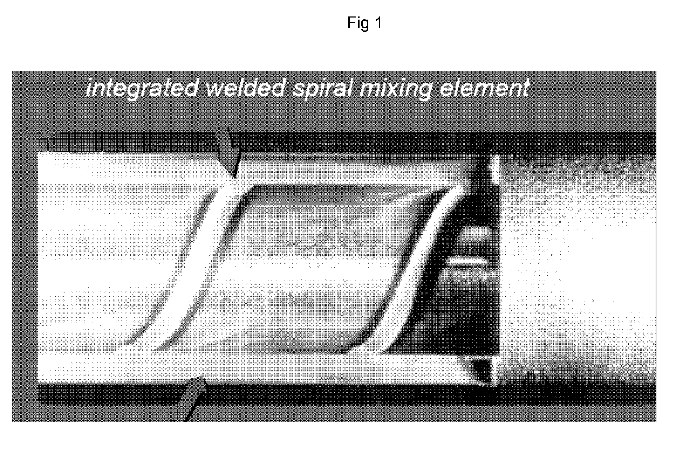

One can cite, by way of example, the MERT tubes. These tubes are already used in the radiant zone of a cracking furnace to make ethylene. Fig 1 depicts an example of such a MERT tube. One can also cite the SCOPE® tubes by Schmidt & Clemens.

**The present invention also relates to a quench exchanger** close coupled to a furnace for quenching the effluent gas of the said furnace comprising :
a plurality of quench tubes in which the effluent gas is passed and such as the inlet of one quench tube is connected to the outlet of one or more tubes of the radiant zone of the furnace,
means for recovering the effluent gas after it has been cooled in the quench tubes,
wherein,
at least a part of the quench tubes and advantageously all the quench tubes are tubes having a spiral element protuberate inside of it, on all the length or a part of the length, to promote turbulent flow.

The above details relating to the process are available mutatis mutandis to the quench exchanger as an apparatus.

### [Examples]

Test simulations have been made for a naphta cracker where each outlet tube of the radiant zone is connected to a close coupled TLE.

| wt% | Furnace outlet | quench outlet comparative ex : no spiral element. | % change between comp ex and furnace outlet |
|---|---|---|---|
| Ethylene | 28.07 | 28.30 | 0.8% |
| Propylene | 17.24 | 16.97 | -1.6% |
| Methane | 14.16 | 14.55 | 2.8% |
| Ethane | 3.52 | 3.59 | 2% |
| | | | |
| Selectivity | 39.05 | 37.3 | -14% |

## Claims

1. Process for quenching the effluent gas of a furnace comprising :
a) providing a furnace comprising a radiant zone enclosure means having a plurality of tubes disposed therein, an inlet means for introducing the process fluid into the tubes, means for exposing the external surface of the tubes to radiant heat for heating said process fluid and thereby produce an effluent gas,
b) providing a quench zone having a plurality of quench tubes in which the effluent gas is passed and such as the inlet of one quench tube is connected to the outlet of one or more tubes of the radiant zone,
c) recovering the effluent gas after it has been cooled in the quench tubes,
wherein,
at least a part of the quench tubes are tubes having a spiral element protuberate inside of it, on all the length or a part of the length, to promote turbulent flow.

2. Process according to claim 1 wherein the inlet of one quench tube is connected to the outlet of two tubes of the radiant zone.

3. Process according to claim 1 or 2 wherein all the quench tubes are tubes having a spiral element protuberate inside of it, on all the length or a part of the length, to promote turbulent flow.

4. Process according to any one of the preceding claims wherein the quench tubes have an outside diameter of about 2.5 to about 5 inches.

5. Process according to claim 4 wherein the quench tubes have an outside diameter of about 3 inches.

6. Quench exchanger close coupled to a furnace for quenching the effluent gas of the said furnace comprising :
a plurality of quench tubes in which the effluent gas is passed and such as the inlet of one quench tube is connected to the outlet of one or more tubes of the radiant zone of the furnace,
means for recovering the effluent gas after it has been cooled in the quench tubes,
wherein,
at least a part of the quench tubes are tubes having a spiral element protuberate inside of it, on all the length or a part of the length, to promote turbulent flow.

7. Quench exchanger according to claim 6 wherein the inlet of one quench tube is connected to the outlet of two tubes of the radiant zone.

8. Quench exchanger according to claim 6 or 7 wherein all the quench tubes are tubes having a spiral element protuberate inside of it, on all the length or a part of the length, to promote turbulent flow.

9. Quench exchanger according to any one of claims 6 to 8 wherein the quench tubes have an outside diameter of about 2.5 to about 5 inches.

10. Quench exchanger according to claim 9 wherein the quench tubes have an outside diameter of about 3 inches.
